# EUROPÄISCHE PATENTANMELDUNG

(11) **EP 1 894 465 A1**
(43) Veröffentlichungstag der Anmeldung: **05.03.2008**
(21) Anmeldenummer: 07114907.4
(22) Anmeldetag: 24.08.2007
(51) Int. Cl.: A01F 7/06, A01F 12/24

(54) **Erntegutbearbeitungseinheit mit wählbaren Leitschienen unterschiedlicher Steigung**

(30) Priorität: 31.08.2006 DE 102006040979
(71) Anmelder: Deere & Company, Moline, IL 61265-8098 (US)
(72) Erfinder: Büermann, Dr., Martin, 89437, Haunsheim (DE); Becker, Klaus E, East Moline, IL 61244 (US); Braunhardt, Klaus, Ottumwa, IA 52501 (US); Pirro, Dr., Peter, 66917, Wallhaben (DE)
(74) Vertreter: Holst, Sönke

(57) **Zusammenfassung**

Die Erfindung bezieht sich auf eine Erntegutbearbeitungseinheit (26) mit einem Rotor (36), einem den Rotor (36) umschließenden Rotorgehäuse (34), einem Deckelelement (54) des Rotorgehäuses (34), und einer ersten Gruppe von wendelförmigen Leitschienen (56), die gegenüber dem Deckelelement (54) zwischen einer wirksamen Position, in der sie sich unterhalb des Deckelelements (54) im Eingriff mit Erntegut befinden und einer unwirksamen Position, in der sie sich oberhalb des Deckelelements (54) befinden, bewegbar sind.

Es wird vorgeschlagen, dass eine zweite Gruppe von wendelförmigen Leitschienen (56') vorgesehen ist, die im Wechsel mit der ersten Gruppe von Leitschienen (56) gegenüber dem Deckelelement (54) zwischen einer wirksamen Position, in der sie sich unterhalb des Deckelelements (54) im Eingriff mit Erntegut befinden und einer unwirksamen Position, in der sie sich oberhalb des Deckelelements (54) befinden, bewegbar sind, und die eine Steigung aufweisen, die von der Steigung der Leitschienen (56) der ersten Gruppe verschieden ist.

## Beschreibung

Die Erfindung betrifft eine Erntegutbearbeitungseinheit mit einem Rotor, einem den Rotor umschließenden Rotorgehäuse, das ein Deckelelement umfasst, und einer ersten Gruppe von wendelförmigen Leitschienen, die gegenüber dem Deckelelement zwischen einer wirksamen Position, in der sie sich unterhalb des Deckelelements im Eingriff mit Erntegut befinden und einer unwirksamen Position, in der sie sich oberhalb des Deckelelements befinden, bewegbar sind.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Rotormähdrescher haben einen oder zwei in einem Rotorgehäuse angeordnete Rotoren zum Dreschen und Trennen des geernteten Gutes. Bei den meisten Rotormähdreschern sind der Rotor oder die Rotoren entlang der Längsachse des Mähdreschers angeordnet. Diese Rotoren sind mit einem Beschickungsabschnitt zum Annehmen von Erntegut, das vom Feld geerntet wurde, einem Dreschabschnitt zum Dreschen des vom Beschickungsabschnitt erhaltenen Ernteguts und einem Trennabschnitt zum Herauslösen von Korn, das in dem gedroschenen Erntegut noch enthalten ist, das vom Dreschabschnitt erhalten wurde, ausgestattet. Während der Drehung des Rotors wird das Erntegut in Längsrichtung vom Beschickungsabschnitt durch den Dreschabschnitt des Rotors zum Trennabschnitt bewegt. Im Trennabschnitt wird die axiale Bewegung des Ernteguts durch wendelförmige Leitschienen erzielt, die unterhalb des Deckelelements des Rotorgehäuses angeordnet sind. Die Verweilzeit des Ernteguts im Trennabschnitt hängt von der Steigung der Leitschienen ab, d. h. dem Anstellwinkel zwischen den Leitschienen und dem Radius des Rotors.

In der US 4 244 380 A wird vorgeschlagen, die Leitschienen an der Oberseite des Rotorgehäuses gemeinsam zu verstellen, um die Steigung der Leitschienen an die Art des Ernteguts und dessen Eigenschaften anpassen zu können. Die Leitschienen sind an ihrem ersten Ende schwenkbar am Rotorgehäuse befestigt und an ihrem zweiten Ende mit einer Verstellstange verbunden, welche in axialer Richtung des Rotors verschiebbar ist. Die Verschiebung der Verstellstange ermöglicht eine Variation der Steigung der Leitschienen. Hierbei ergeben sich jedoch Spalte zwischen den Leitschienen und dem Rotorgehäuse, da der Krümmungsradius der in sich starren Leitschienen nicht in allen Positionen mit der Krümmung des Bereichs des Rotorgehäuses übereinstimmen kann, an dem die Leitschiene jeweils anliegt. In den Spalten sammelt sich Erntegut an, das eine Verstellung der Leitschienen ohne vorherige Reinigung des Spaltes erschwert oder unmöglich machen kann.

Weiterhin werden in der als gattungsbildend angesehenen US 4 258 726 A andere Möglichkeiten zur Verstellung von Leitschienen einer axialen Erntegutbearbeitungseinheit vorgeschlagen. Bei einer ersten Ausführungsform sind im Deckel des Rotorgehäuses Schlitze vorgesehen, denen jeweils eine Leitschiene zugeordnet ist. Die Leitschienen sind an ihrem stromauf liegenden Ende um koaxial zur Drehachse des Rotors verlaufende Achsen schwenkbar und an ihrem stromab liegenden Ende in vertikaler Richtung verstellbar. Dadurch kann die wirksame Länge der Leitschienen verändert werden. Bei einer anderen Ausführungsform sind die Leitschienen zweigeteilt, wobei der stromab liegende Teil in Längsrichtung der Leitschiene beweglich ist, so dass die Länge der Leitschiene veränderlich ist. Bei einer dritten Ausführungsform umfasst der Deckel des Rotorgehäuses ein drehbar angeordnetes Element, das sich in Umfangsrichtung des Rotorgehäuses über einen Teil des Deckels oder über den ganzen Deckel erstreckt und in mehreren Drehstellungen am Rotor anordenbar ist. In jeder Drehstellung kommen Deckelbereiche mit Leitschienen anderer Steigung in Eingriff mit dem Erntegut. Bei der ersten und zweiten Ausführungsform wird das Erntegut bei kürzeren wirksamen Längen der Leitschienen auch nur über einen kleineren Drehwinkel des Rotors gefördert, was den Nachteil hat, dass der Erntegutfluss relativ ungleichmäßig wird, da sich vermehrt Erntegut im dem Ende der Leitschiene benachbarten Bereich des Rotors ansammelt, was wiederum eine ungleichmäßige Trennwirkung des Rosts unterhalb des Rotors zur Folge hat. Die dritte Ausführungsform ist recht aufwändig, da nicht nur mehrere Sätze von Leitschienen, sondern auch von Deckeln erforderlich sind.

### Aufgabe der Erfindung

Die der Erfindung zu Grunde liegende Aufgabe wird darin gesehen, eine Erntegutbearbeitungseinheit eingangs genannter Art bereitzustellen, die auf einfache, aber zuverlässige Weise eine Veränderung der Steigung der Leitschienen ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Erntegutbearbeitungseinheit umfasst ein Rotorgehäuse und einen darin angeordneten Rotor. Das Rotorgehäuse umfasst ein Deckelelement mit wendelförmigen Leitschienen. Es wird vorgeschlagen, eine erste Gruppe von Leitschienen und eine zweite Gruppe von Leitschienen vorzusehen, die wechselweise jeweils zwischen einer wirksamen Position unterhalb der Unterseite des Deckelelements und einer unwirksamen Position oberhalb der Unterseite des Deckelelements beweglich sind. Die Steigungen, d. h. die Winkel zwischen den Leitschienen und dem Radius des Rotors, sind bei den Leitschienen beider Gruppen unterschiedlich.

Auf diese Weise erreicht man mit einfachen und zuverlässigen Mitteln, dass die Steigung der Leitschienen auswählbar und an die jeweilige Erntegutart und die Ernteguteigenschaften anpassbar wird.

Das Deckelelement mit den erwähnten, auswählbaren Leitschienen befindet sich vorzugsweise in einem Trennbereich der Erntegutbearbeitungseinheit. Umfasst letztere auch einen Dreschabschnitt, kann alternativ oder zusätzlich das Deckelelement dort angeordnet werden.

Das Deckelelement umfasst insbesondere Schlitze, durch die die Leitschienen jeweils in den Innenraum des Rotorgehäuses abgesenkt werden können. Die Leitschienen können zwischen den beiden Positionen verschoben oder verschwenkt werden.

### Ausführungsbeispiel

Anhand der Abbildungen wird ein Ausführungsbeispiel der Erfindung erläutert. Es zeigen:
- Fig. 1: eine teilgeschnittene seitliche Ansicht eines Mähdreschers mit einer axialen Erntegutbearbeitungseinheit,
- Fig. 2: eine perspektivische Ansicht des Gehäuses der Erntegutbearbeitungseinheit,
- Fig. 3: eine perspektivische Ansicht des Rotors,
- Fig. 4: eine Draufsicht auf den Deckel des Rotorgehäuses und
- Fig. 5: einen seitlichen Schnitt durch das Rotorgehäuse und die darin angeordneten Leitschienen entlang der Linien 5-5 der Figur 4.

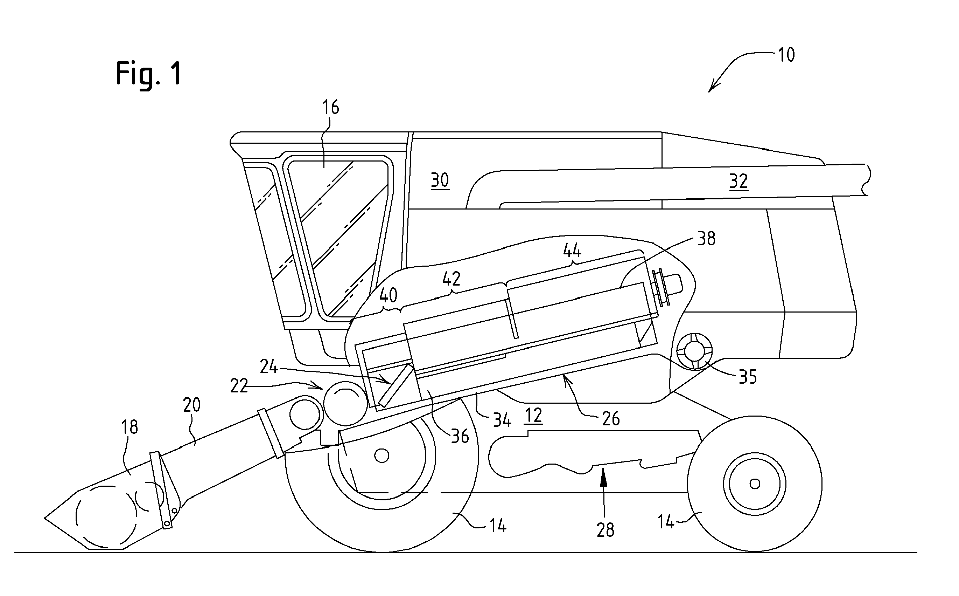

Die Figur 1 zeigt einen landwirtschaftlichen Mähdrescher 10 mit einer tragenden Struktur 12 mit im Eingriff mit dem Boden befindlichen Rädern 14, die an der Struktur 12 befestigt sind. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinheit 26.

Die Erntegutbearbeitungseinheit 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Erntegutbearbeitungseinheit 26 angeordnet. In Längsrichtung stromab und rückwärtig des Beschickungsabschnitts 40 sind der Dreschabschnitt 42 und der Trennabschnitt 44. Die Trommel 38 im Beschickungsabschnitt 40 ist kegelstumpfförmig. Der Dreschabschnitt 42 umfasst einen kegelstumpfförmigen vorderen Abschnitt und einen zylindrischen rückwärtigen Abschnitt. Am Ende der axialen Erntegutbearbeitungseinheit 26 befindet sich der zylindrische Trennabschnitt 44 der Trommel 38.

Korn und Spreu, die durch einen Dreschkorb 46 und ein Trennrost 48 fallen, werden einem Reinigungssystem 28 mit einem Gebläse und in eine Schwingbewegung versetzbaren Lamellensieben zugeführt. Das Reinigungssystem 28 entfernt die Spreu und führt das saubere Korn einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Gedroschenes und den Trennabschnitt verlassendes Stroh wird durch einen Auslass aus der Erntegutbearbeitungseinheit 26 ausgestoßen und einer Fördertrommel 35 zugeführt. Die Fördertrommel 35 stößt das Stroh wiederum an der Rückseite des Mähdreschers 10 aus, ggf. nach Durchlauf eines Strohhäckslers (nicht gezeigt).

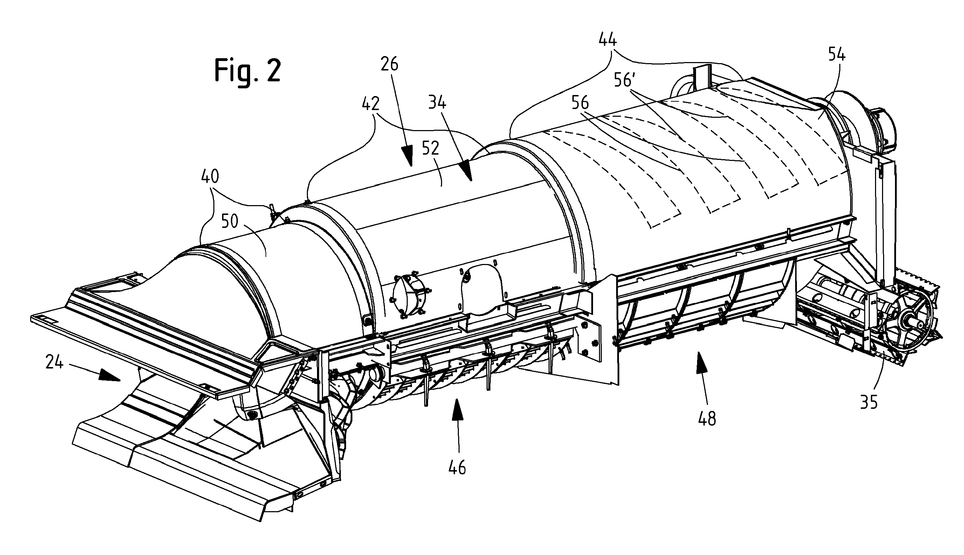

Es wird nun auf die Figur 2 Bezug genommen. Die Unterseite des Rotorgehäuses 34 weist unter dem Dreschabschnitt 42 einen als Dreschkorb 46 bezeichneten Rost auf. Der Trennrost 48 befindet sich unter dem Trennabschnitt 44. Unterhalb des Beschickungsabschnitts 50 ist das Rotorgehäuse 34 geschlossen. An der Oberseite des Rotorgehäuses 34 sind Deckelelemente 50, 52, 54 mit halbkreisförmigem Querschnitt angeordnet, die jeweils dem Beschickungsabschnitt 40, dem Dreschabschnitt 42 und dem Trennabschnitt 44 zugeordnet sind. Das Deckelelement 52 des Dreschabschnitts 42 ist exzentrisch zur Drehachse des Rotors 36 angeordnet, wie auch das Deckelelement 54 des Trennabschnitts 44, dessen Exzentrizität größer als die des Deckelelements 52 des Dreschabschnitts 42 ist. An der Unterseite des Deckelelements 54 des Trennabschnitts 44 befinden sich wahlweise Leitschienen 56 oder 56'.

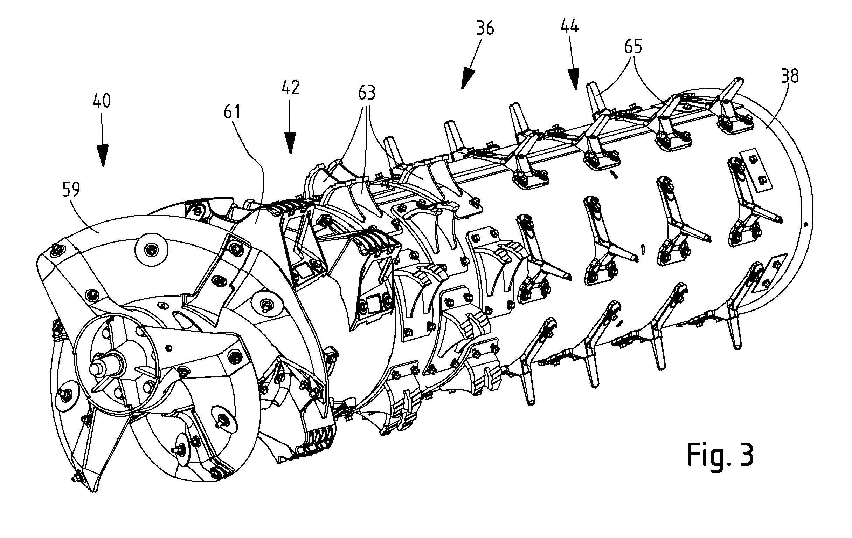

Wie in der Figur 3 dargestellt, ist der Beschickungsabschnitt 40 des Rotors 36 mit wendelförmigen Beschickungselementen 59 ausgestattet, um in das von der Leittrommel 22 erhaltene Erntegut einzugreifen. Der Dreschabschnitt 42 der Erntegutbearbeitungseinheit 26 ist mit einer Anzahl von Dreschzinken 61, 63 zum Dreschen des vom Beschickungsabschnitt erhaltenen Ernteguts ausgestattet. Im Trennabschnitt 44 wird das Korn, das im Dreschabschnitt 42 gedroschen und losgebrochen wurde, durch Trennfinger 65 vom von Korn verschiedenen Erntegut getrennt, die das vom von Korn verschiedene Erntegut vom Korn fort anheben und trennen.

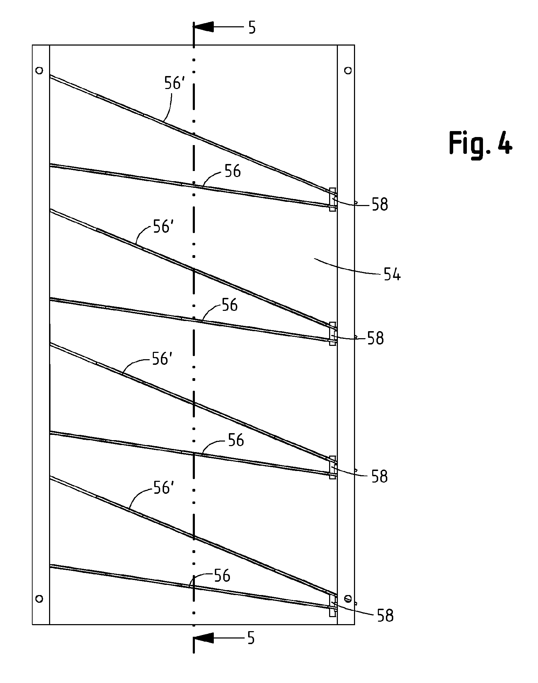

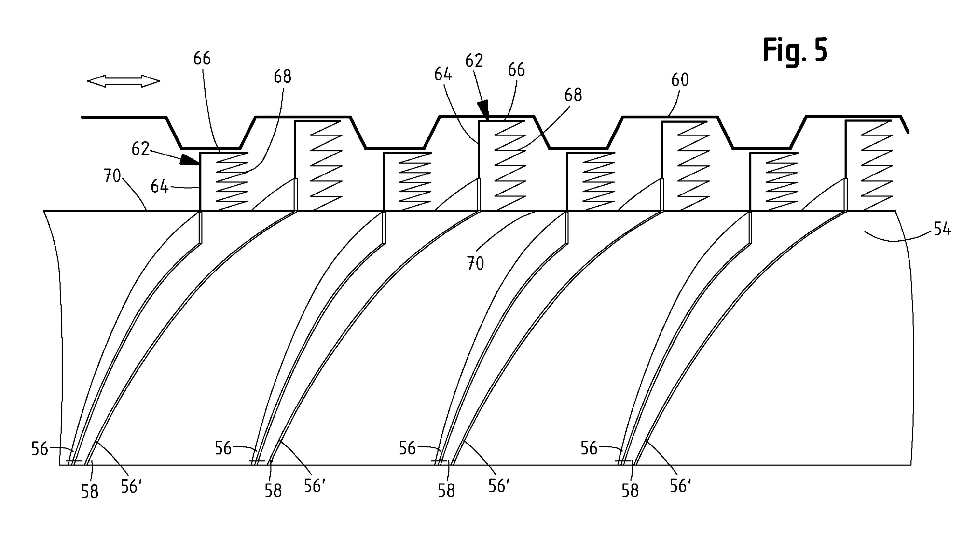

Die Figuren 4 und 5 zeigen eine Draufsicht auf und einen senkrechten Schnitt in Fahrtrichtung durch das Deckelelement 54 des Trennabschnitts 44. Unmittelbar unterhalb des Deckelelementes 54 sind Leitschienen 56 angeordnet. Es sind zwei Gruppen von Leitschienen vorhanden: eine erste Gruppe von Leitschienen 56, die eine relativ kleine Steigung in axialer Richtung aufweisen, und eine zweite Gruppe von Leitschienen 56', die eine größere Steigung in axialer Richtung aufweisen als die erste Gruppe von Leitschienen 56. Beide Gruppen umschließen zumindest näherungsweise denselben Winkelbereich des Rotors 36. Es kann jeweils nur die erste Gruppe von Leitschienen 56 oder nur die zweite Gruppe von Leitschienen 56' an der Unterseite des Deckelelements 54 positioniert werden, während sich die andere Gruppe (56' oder 56) dann jeweils oberhalb der Unterseite des Deckelelements 54 befindet.

Dazu ist der in der Figur 5 dargestellte Mechanismus vorgesehen. Die Leitschienen 56, 56' sind an ihrem in Drehrichtung des Rotors 36 vorlaufenden Enden um sich parallel zur Drehachse des Rotors 36 erstreckende Schwenkachsen 58 schwenkbar mit dem Deckelelement 54 verbunden. An der Mitte des Deckelelements 54 sind die Leitschienen 56, 56' jeweils mit rechtwinkligen Verbindungselementen 62 verbunden, die einen vertikal verlaufenden, mit der Leitschiene 56 bzw. 56' verbundenen Schenkel 64 und einen horizontal verlaufenden, an der Oberseite des vertikal verlaufenden Schenkels 64 angeordneten, sich in axialer Richtung des Rotors 36 erstreckenden Schenkel 66 umfassen. Die Verbindungselemente 62 befinden sich oberhalb des Deckelelements 54. Zwischen den horizontalen Schenkeln 66 und dem Deckelelement 54 sind jeweils Spiralfedern 68 angeordnet. Oberhalb der Verbindungselemente 62 ist eine in Fahrtrichtung verschiebbare Kulisse 60 angeordnet, die ausgelegt ist, die Verbindungselemente 62 und die damit verbundenen Leitschienen 56 oder 56' entweder gegen die Kraft der Feder 68 nach unten in den Innenraum des Rotorgehäuses 34 zu drücken oder daraus heraus zu lassen. Das Deckelelement 54 ist im Bereich der Leitschienen 56, 56' mit Schlitzen 70 versehen, die den Leitschienen 56, 56' die beschriebene Bewegung ermöglichen. Abhängig von der Stellung der Kulisse 60 sind somit entweder die Leitschienen 56 oder die Leitschienen 56' im Eingriff mit dem Erntegut, während die anderen Leitschienen dann jeweils wirkungslos sind.

Die Kulisse 60 kann über eine geeignete Mechanik durch den Fahrer in der Bedienerkabine 16 bewegt werden, oder es wird dort ein Schalter angebracht, der mit einem fremdkraftbetätigten Aktor verbunden ist, der die Kulisse 60 bewegt. Die Kulisse 60 könnte auch durch eine drehbare Kurbelwelle (nicht gezeigt) ersetzt werden. Die Kulisse 60 (oder die Kurbelwelle) könnte auch am in der Figur 4 links eingezeichneten (in Drehrichtung des Rotors 36 nachlaufenden) Ende der Leitschienen 56, 56' angeordnet werden.

Im Betrieb wird Erntegut durch die Leittrommel 22 über den Einlassübergangsabschnitt 24 in die axiale Erntegutbearbeitungseinheit 26 gefördert. Das Erntegut wird zwischen den wendelförmigen Förderelementen 59 auf dem kegelstumpfförmigen Frontabschnitt des Rotors 36 und dem Gehäuse 34 der axialen Erntegutbearbeitungseinheit 26 eingezogen. Der Aufprall auf die wendelförmigen Förderelemente 59 und das Gehäuse 34 schleudert das Korn vom Erntegut fort. Die Form und Krümmung der wendelförmigen Förderelemente 59 bewegt das Erntegut nach hinten in Richtung auf den Dreschabschnitt 42 der axialen Erntegutbearbeitungseinheit 26. Der Dreschabschnitt 42 stellt durch eine Reibwirkung einen zusätzlichen Drusch des Ernteguts bereit, wenn das Erntegut zwischen den Dreschzinken 61, 63 und dem Gehäuse 34 hindurch läuft. Das ausgedroschene Erntegut wird dann weiter bearbeitet, bis es den Trennabschnitt 44 erreicht. An diesem Verarbeitungspunkt ist das meiste Korn aus dem Erntegut heraus gebrochen. Wenn das Erntegut in den Trennabschnitt 44 eintritt, trennen die Trennfinger 65 das von Korn verschiedene Erntegutmaterial von eigentlichem Korn, das durch den Trennrost 48 hindurch in das Reinigungssystem 28 gelangt.

Die axiale Bewegung des Ernteguts im Trennbereich 44 wird durch die Steigung der Leitschienen 56 oder 56' definiert. Wenn Erntegut aufgrund der Fruchtart oder einer Beschaffenheit, wie Feuchtigkeit o. ä., eine längere Verweildauer im Trennabschnitt erfordert, erlaubt es die erfindungsgemäße Anordnung, die Leitschienen 56 in ihre wirksame Stellung zu verbringen. Aufgrund der relativ geringen Steigung der Leitschienen 56 wird das Erntegut bei einer Umdrehung des Rotors 36 nur um einen relativ geringen axialen Weg weitergefördert, so dass es relativ lange im Trennabschnitt verbleibt. Analog werden die Leitschienen 56' in ihre wirksame Stellung verbracht, wenn das Erntegut nur eine relativ kleine Verweildauer im Trennabschnitt benötigt. Dann wird es bei einer Umdrehung des Rotors 36 aufgrund der größeren Steigung der Leitschienen 56', um einen weiteren axialen Weg bewegt. Die Auswahl der Leitschienen 56 oder 56' kann der Bediener anhand der Erntegutart und/oder anderer Eigenschaften (z. B. Feuchtigkeit und/oder Reifegrad) des Ernteguts durchführen, oder es wird eine Steuereinrichtung bereitgestellt, der Informationen hinsichtlich der Erntegutart und/oder der erwähnten Eigenschaften des Ernteguts zugeführt werden und die die Kulisse 60 selbsttätig mittels eines fremdkraftbetätigten Aktors (nicht gezeigt) bewegt. Auch kann ein Sensor zur Erfassung der Erntegutmenge im Trennabschnitt 44 vorgesehen sein, der im Fall eines oberhalb eines Schwellenwerts liegenden Messwerts einen Wechsel zu den Leitschienen 56' veranlasst.

Anzumerken ist, dass verschiedene Modifikationen der dargestellten Ausführungsform möglich sind. So könnte die Erntegutbearbeitungseinheit 26 nur einen Trennabschnitt 44 oder nur einen Beschickungsabschnitt 40 und einen Trennabschnitt 44 aufweisen und ihr ein konventionelles Tangentialdreschwerk vorgeordnet sein. Es könnten auch zwei derartige oder oben beschriebene Erntegutbearbeitungseinheiten 26 seitlich nebeneinander angeordnet werden. Auch wäre es denkbar, die Leitschienen 56, 56' nicht um Achsen 58 zu verschwenken, sondern zwischen den wirksamen und den unwirksamen Positionen zu verschieben. Dazu können geeignete Mechanismen, die insbesondere der dargestellten Kulisse 60 oder der erwähnten Kurbelwelle entsprechen, an beiden Enden der Leitschienen 56, 56' oder dazwischen angreifen.

## Patentansprüche

1. Erntegutbearbeitungseinheit (26) mit einem Rotor (36), einem den Rotor (36) umschließenden Rotorgehäuse (34), das ein Deckelelement (54) umfasst, und einer ersten Gruppe von wendelförmigen Leitschienen (56), die gegenüber dem Deckelelement (54) zwischen einer wirksamen Position, in der sie sich unterhalb des Deckelelements (54) im Eingriff mit Erntegut befinden und einer unwirksamen Position bewegbar sind, in der sie sich oberhalb des Deckelelements (54) befinden, **gekennzeichnet durch** eine zweite Gruppe von wendelförmigen Leitschienen (56'), die im Wechsel mit der ersten Gruppe von Leitschienen (56) gegenüber dem Deckelelement (54) zwischen einer wirksamen Position, in der sie sich unterhalb des Deckelelements (54) im Eingriff mit Erntegut befinden und einer unwirksamen Position, in der sie sich oberhalb des Deckelelements (54) befinden, bewegbar sind, und die eine Steigung aufweisen, die von der Steigung der Leitschienen (56) der ersten Gruppe verschieden ist.

2. Erntegutbearbeitungseinheit (26) nach Anspruch 1, **dadurch gekennzeichnet, dass** der Rotor (36) und das Rotorgehäuse (34) einen Trennabschnitt (44) umfassen, dem das Deckelement (54) zugeordnet ist.

3. Mähdrescher mit einer Erntegutbearbeitungseinheit (26) nach Anspruch 1 oder 2.
